# EUROPEAN PATENT SPECIFICATION

(11) **EP 1 843 054 B1**
(45) Date of publication and mention of the grant of the patent: **18.05.2011**
(21) Application number: 07006426.6
(22) Date of filing: 28.03.2007
(51) Int. Cl.: F16C 19/38, F16C 33/78, B60B 27/00

(54) **Wheel hub rolling element bearing assembly with sealing member**
Radlagereinheit mit Dichtung
Roulement de moyeu avec garniture d'étancheité

(30) Priority: 31.03.2006 JP 2006097366
(43) Date of publication of application: 10.10.2007
(73) Proprietor: JTEKT Corporation, Osaka-shi Osaka 542-8502 (JP)
(72) Inventor: Inoue, Shigeru, Osaki-shi, Osaka 542-8502 (JP); Adachi, Ken, Osaki-shi, Osaka 542-8502 (JP); Takada, Yoshito, Osaki-shi, Osaka 542-8502 (JP); Nagata, Syuuji, Osaki-shi, Osaka 542-8502 (JP); Ishikawa, Tetsuya, Osaki-shi, Osaka 542-8502 (JP); Yu, Changxin, Osaki-shi, Osaka 542-8502 (JP); Harada, Katsuyuki, Osaki-shi, Osaka 542-8502 (JP)
(74) Representative: Weber, Joachim

(56) References cited:
- EP-A- 0 458 122
- US-A- 3 899 226
- US-A- 4 647 230

## Description

### BACKGROUND OF THE INVENTION

The present invention relates to a bearing device for a wheel that is provided with a rolling bearing assembled into a cylindrical shaft of a hub wheel having a flange to which a wheel is assembled.

In this kind of bearing device for wheel, generally, a rolling bearing assembled onto a cylindrical shaft of a hub wheel includes an inner ring having an inner raceway surface in an outer periphery, an outer ring in which an outer raceway surface corresponding to the inner raceway surface of the inner ring is formed at the inner periphery, a plurality of rolling elements disposed between the inner raceway surface and the outer raceway surface, and an inner sealing member incorporated in an annular clearance formed between the inner ring and the outer ring so as to seal the clearance.
In order to prevent an invasion of slurry from an clearance formed between the outer ring and the flange, a technique in which an annular outer sealing member is mounted on the end of the outer periphery of the outer ring located at the flange side so as to close the clearance formed between the outer ring and the flange is known.
Furthermore, a technique in which the outer sealing member includes a main cylindrical body of a stepped cylinder shape having a fixed base part that is inserted into and fixed to one end of the outer periphery of the outer ring and a sealing lip that is integrally formed along the periphery of the tip of the main cylindrical body and made of an elastic material is also known (for example, see JP-A-2003-148494)

However, if the main cylindrical body of the outer sealing member is formed so as to have a stepped cylinder shape or a horizontal cylinder shape, the flow (discharging property) of slurry in an upper outer periphery surface of the main cylindrical body becomes poor. Therefore, the flow of slurry becomes stationary. For this reason, some slurry accidentally invades from a small clearance formed between the fixed base part of the main cylindrical body and the outer ring, and the inner sealing member can be influenced by adverse effects.

EP-A2-0 458 122 discloses a device according to the preamble of claim 1.

### SUMMARY OF THE INVENTION

It is an object of the invention to solve the problems described above, and to provide the bearing device for wheel that can prevent the accidental invasion of the slurry by, smoothing the flow of slurry into the outer periphery of the main cylindrical body of the outer sealing member.

This object is solved by the features of claim 1. The dependent claims contain further preferred embodiments of the invention.

With this configuration, the main cylindrical body of the outer sealing member has the fixed base part that is inserted on the flange side end of the outer periphery of the outer ring to be fixed, and the sealing lip of the tip of the main cylindrical body elastically comes in pressure-contact with one side of the flange. Therefore, the clearance between the outer ring and the flange is favorably closed.
Since the main cylindrical body of the outer sealing member is formed so as to have a tapered cylinder shape of which the diameter is gradually changed toward the tip from the fixed base part, the slurry splashed in the upper part on the outer periphery surface of the main cylindrical body smoothly flows downwardly along the sloped outer periphery of the main cylindrical body during the traveling of the vehicle.
In this way, since the flow of the slurry is smooth, it is possible to prevent an accidental invasion of the slurry. Consequently, since the inner sealing member can be protected from the slurry, the endurance of the rolling bearing is largely improved.

with this configuration, even though the slurry is invaded from between the fixed base part of the main cylindrical body of the outer sealing member and the outer ring, or between the sealing lip and the flange, the invaded slurry is favorably discharged from the drainage hole of the lower part of the outer sealing member.
Accordingly, since the slurry can be prevented from accumulating in the lower part of the inner periphery of the outer sealing member, the inner sealing member may be prevented from adverse affects.

With the configuration of claim 2, it can prevent an accidental deformation of the fixed base part by reinforcing the fixed base part of the main cylindrical body by the reinforcement rib. Therefore, since the clearance between the outer ring and the fixed base part that can be generated by the deformation of the fixed base part can be prevented, the invasion of the slurry is largely prevented.

### BRIEF DESCRIPTION OF THE DRAWINGS

Fig. 1 is a sectional side view showing a wheel hub unit as a bearing device for a wheel according to a first embodiment of the invention.
Fig. 2 is an enlarged sectional side view of the lower part of an outer sealing member in the wheel hub unit according to a first embodiment of the invention.
Fig. 3 is a sectional side view showing a wheel hub unit as a bearing device for wheel according to a second embodiment of the invention.
Fig. 4 is an enlarged sectional side view of the lower part of an outer sealing member in the wheel hub unit according to a first embodiment.

### DETAILED DESCRIPTION OF PREFERRED EMBODIMENTS

Hereinafter, the preferred embodiment of the invention will be described.

### First Embodiment

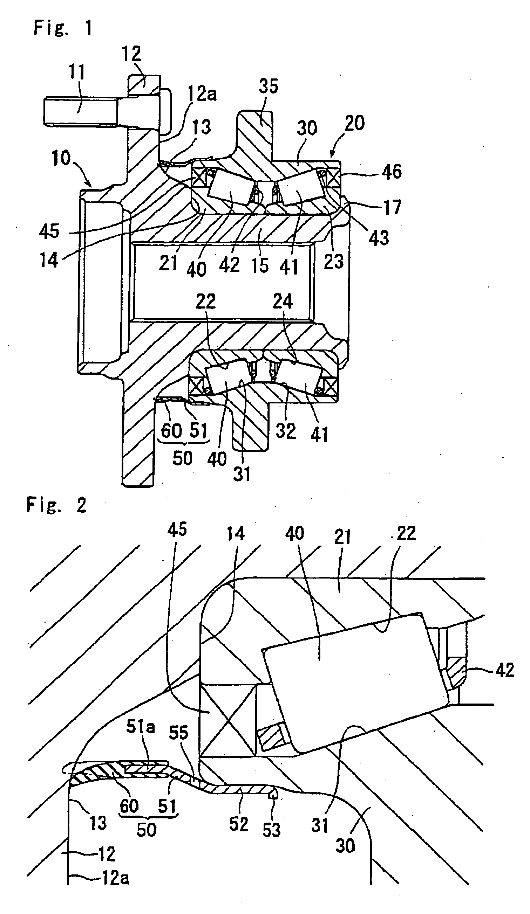

A first embodiment will be described with reference to Figs 1 and 2.
Fig. 1 is a sectional side view showing a wheel hub unit as a bearing device for wheel according to the first embodiment of the invention. Fig. 2 is an enlarged sectional side view of the lower part of an outer sealing member in the wheel hub unit.
As shown in Figs..1 and 2, the wheel hub unit as a bearing device for wheel includes a hub wheel 10 and a double row outwardly tapered roller bearing 20 as a rolling bearing. The hub wheel 10 and the bearing 20 are integrally formed.

The hub wheel 10 includes integrally a cylindrical shaft 15 and a flange 12 formed on an outer periphery of one end side of the cylindrical shaft 15. Hub bolts 11 for fixing a wheel (not shown) are fixed to the flange 12 by a prescribe pitch.
After a spline shaft part (external tooth spline) formed at the shaft end of a drive shaft (not shown) is inserted into and spline-fitted to an inner hole of the cylindrical shaft 15, a nut is secured to male screw of the tip of a spline shaft, thereby the hub wheel 10 is connected so as to transmit torque to the drive shaft.

The tapered roller bearing 20 includes a first inner ring 21, a second inner ring 23, an outer ring 30, tapered rollers 40 and 41, an inner sealing member 45, and an inner sealing member 46. In this configuration, the first inner ring 21 is inserted up to the position that contacts with a stepped surface 14 formed in a base part of the flange 12 from one end of the cylindrical shaft 15, the second inner ring 23 is inserted so as to be abutted to the first inner ring 21, and the outer ring 30 is provided with both outer raceway surfaces 31 and 32 formed at an inner periphery. Both outer raceway surfaces 31 and 32 are opposite to both inner raceway surfaces 22 and 24 each formed at the outer periphery of the first and second inner rings 21 and 23. Furthermore, the tapered rollers 40 and 41 serve as a plurality of rolling elements that are disposed between the inner raceway surface 22 and the outer raceway surface 31 and between the inner raceway surface 24 and the outer raceway surface 32. The rolling elements are held at a prescribed interval by cages 42 and 43. The inner sealing member 45 is incorporated in an annular clearance formed between the first inner ring 21 and the outer ring 30 so as to seal the clearance, and the inner sealing member 46 is incorporated in an annular clearance formed between the second inner ring 23 and the outer ring 30 so as to seal the clearance.
One end of the cylindrical shaft 15 is formed with a caulking part 17 that is plastic-deformed by expanding the end outward in a radial direction by a caulking process to fix the first and second inner rings 21 and 23 to the outer periphery of the cylindrical shaft 15.
Furthermore, according to the first embodiment of invention, a flange 35 is integrally formed on the outer periphery of the outer ring 30 at a center in the shaft direction. Then, the wheel hub unit is fastened to an attachment surface of a knuckle (or hub carrier) supported to a vehicle body-side member (not shown), for example, a suspension device of the vehicle by bolts in the flange 35 of the outer ring 30.

An outer sealing member 50 that closes the clearance between the outer ring 30 and the flange 12 is mounted on the end of the outer periphery of the outer ring located at the flange 12.
As shown in Fig. 2, the outer sealing member 50 is configured such that a rigid main cylindrical body 51 and a sealing lip 60 made of an elastic material are integrally provided. According to the first embodiment of the invention, the cylindrical main cylindrical body 51 is formed of a metallic plate having resistance to corrosion, for example, stainless sheet, and a proximal end is formed with a fixed base part 52 that is inserted into and fixed to one end of the outer periphery of the outer ring 30 by a press fitting.
The main cylindrical body 51 is formed so as to have a tapered cylinder shape of which the diameter is gradually reduced toward the tip from the fixed base part 52.
Furthermore, according to the first embodiment of the invention, a drainage hole 55 is formed in the vicinity of the downwardly sloped lower end in the main cylindrical body 51 of the outer sealing member 5.0.
A reinforcement rib 53 projecting outward in a radial direction is formed at the terminal of the fixed base part 52 of the main cylindrical body 51.

The sealing lip 60 is made of an elastic material such as a soft resin and rubber and is integrally formed by performing an insert molding or the like along the periphery of the tip 51a so as to embed the tip 51a of the main cylindrical body 51. Moreover, the tip of the sealing lip 60 is elastically press-contacted to a curved surface 13 formed between the stepped part 14 of the base part of the flange 12 and a flange surface 12a. Furthermore, the sealing lip 60 is formed of a vulcanized rubber. Therefore, the sealing lip 60 may be vulcanization-adhered to the tip 51a of the main cylindrical body 51.

In the hub unit for vehicle as a bearing device for wheel according to the first embodiment of the invention, as described above, before the tapered roller bearing 20 is assembled onto the cylindrical shaft 15 of the hub wheel 10, the main cylindrical body 51 of the outer sealing member 50 is fixed by being inserted onto the flange side end of the outer periphery of the outer ring 30 of the tapered roller bearing 20 that is located at the flange 12 side by press-fitting in the fixed base part 52.
Then, the tapered roller bearing 20 is assembled onto the cylindrical shaft 15 of the hub wheel 10 as described above.
At this state, since the tip of the sealing lip 60 of the outer sealing member 50 is elastically press-contacted to the curved part 13 near one-sided base part of the flange 12 of the hub wheel 10, the clearance between the outer ring 30 and the flange 12 is favorably closed. Incidentally, the sealing lip 60 becomes a substantially horizontal state in a free state, as indicated by dashed-two dotted line in Fig. 2.

Since the main cylindrical body 51 of the outer sealing member 50 is formed so as to have a tapered cylinder shape of which the diameter is gradually reduced toward the tip from the fixed base part 52, slurry splashed in the upper part on the outer periphery surface of the main cylindrical body 51 smoothly flows toward the flange 12 of the downwardly sloped lower end of along the sloped outer periphery of the main cylindrical body 51 during the traveling of the vehicle.
In this way, since the flow of the slurry is smooth, it is possible to prevent an accidental invasion of the slurry. Consequently, since the inner sealing member 45 can be protected from the slurry, durability of the tapered roller bearing 20 is largely improved.

According to the first embodiment of the invention, as shown in Fig- 2, since the drainage hole 55 is formed at the downwardly sloped end of the lower part of the outer sealing member 50, even though the slurry is invaded from a portion between the fixed base part 52 of the main cylindrical body 51 of the outer sealing member 50 and the outer ring 30, or a portion between the sealing lip 60 and the flange 12, the invaded slurry is favorably discharged from the drainage hole 55 to the outside by flowing along the sloped surface of the lower inner periphery of the outer sealing member 50.
Accordingly, since the slurry can be prevented from accumulating in the lower part of the inner periphery of the outer sealing member 50, the inner sealing member 45 may be prevented from adverse affects.

According to the first embodiment of the invention, it can prevent an accidental deformation of the fixed base part 52 by reinforcing the fixed base part 52 of the main cylindrical body 51 by the reinforcement rib 53. Therefore, since the clearance between the outer ring 30 and the fixed base part 52 that might be generated by the deformation of the fixed base part 52 can be prevented, the invasion of the slurry is largely prevented.

According to the first embodiment of the invention, the main cylindrical body 51 of the outer sealing member 50 is formed so as to have a tapered cylinder shape of which the diameter is gradually reduced toward the tip from the fixed base part 52, and the sealing lip 60 is integrally formed along the periphery of the tip 51a of the main cylindrical body 51. For this reason, the tip of the sealing lip 60 can be press-contacted to the center side of the curved surface 13 near the base part of the flange 12 of the hub wheel 10. As a result, since the processing range of the part of the curved surface 13 near the base part of the flange 12 of the hub wheel 10 where the sealing lip 60 is press-contacted to the curved surface 13 can be reduced as compared with the case where the main cylindrical body 51 is formed so as to have a parallel cylinder shape, it may reduce the processing cost in proportion to the reduced processing range.
Furthermore, since the deformation amount of the base part of the flange 12 due to load is small as compared to the tip, sealing property is excellent.

### Second Embodiment

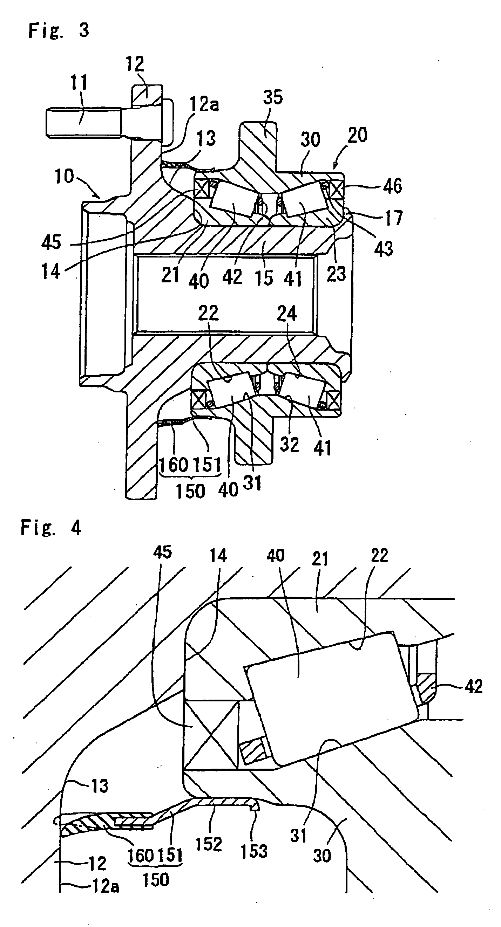

Next, a second embodiment of the invention will be described with reference to Figs. 3 and 4.
Fig. 3 is a sectional side view showing a wheel hub unit as a bearing device for wheel according to the second embodiment of the invention. Fig. 4 is an enlarged sectional side view of the lower part of an outer sealing member in the wheel hub unit.
According to the second embodiment of the invention, a main cylindrical body 151 of the outer sealing member 150 is mounted and fixed to one end of the outer periphery of the outer ring 30 by a press fitting, and the main cylindrical body 151 is formed so as to have a tapered cylinder shape in which the diameter is gradually increased toward the tip from the fixed base part 152-Then, a sealing lip 160 is integrally formed by performing an insert molding or the like along the periphery of the tip 151a of the main cylindrical body 151. Moreover, the tip of the sealing lip 160 is elastically press-contacted to the flange surface 12a formed at one side of the flange 12.
A drainage hole (not shown) is formed at the lower part (vicinity of a downwardly sloped end of the lower part of the main cylindrical body 151 or vicinity of the tip of the sealing lip 160) of the outer sealing member 150, if necessary. Furthermore, a reinforcement rib 153 projecting outward in a radial direction is formed at the terminal of the fixed base part 152 of the main cylindrical body 151.
Since other components of the second embodiment are the same as those of the first embodiment of the invention, the same reference numerals can be denoted to the same components as in Fig. 1 and the description will be omitted.

In the hub unit for vehicle as a bearing device for wheel according to the second embodiment of the invention configured as described above, since the main cylindrical body 151 of the outer sealing member 150 is formed so as to have a tapered cylinder shape of which the diameter is gradually increased toward the tip from the fixed base part 152, slurry splashed in the upper part on the outer periphery surface of the main cylindrical body 151 smoothly flows toward the fixed base part 152 of the downwardly sloped lower end of along the sloped outer periphery of the main cylindrical body 151 during the traveling of car and is guided into the reinforcement rib 153 to flow downward.
In this way, since the flow of the slurry is smooth, it is possible to prevent an accidental invasion of the slurry. Consequently, since the inner sealing member 45 can be protected from the slurry, durability of the tapered roller bearing 20 is largely improved.

The invention is not limited to the first and second embodiments.
For example, the reinforcement rib 53 (153) projecting outward in a radial direction is formed at the terminal of the fixed base part 52 (152) of the main cylindrical body 51 (151) in the first and second embodiments, but the reinforcement rib 53 (153) is not surely necessary. That is, the reinforcement rib 53 (153) may be provided if needed.
Furthermore, the first inner ring 21 and the second inner ring 43 other than the cylindrical shaft 15 are inserted into the outer periphery of the cylindrical shaft 15 of the hub wheel 10 in the first and second embodiments, but the first inner ring 21 and the cylindrical shaft 15 can be integrally formed.
The double row outwardly tapered roller bearing 20 as a rolling bearing is employed in the first and second embodiments, but a double row angular contact ball bearing may be used.

## Claims

1. A bearing device for wheel comprising:
a rolling bearing (20) that includes an inner ring (21, 23), outer ring (30), rolling elements (40, 41) disposed between the inner (21, 23) and outer rings (30), and an inner sealing member (45) assembled in an annular clearance defined between the inner (21, 23) and outer ring (30) to seal the annular clearance;
a hub wheel (10) that includes a flange (12) to which a wheel is to be assembled and a cylindrical shaft (15) to which the rolling bearing (20) is assembled in such a manner that the inner sealing member (45) is located at a side of the flange (12); and
an outer sealing member (50, 150) mounted on an end of an outer periphery of the outer ring (30) located at the side of the flange (12) so as to close a clearance which is defined between the outer ring (30) and the flange (12), wherein
the outer sealing member (50, 150) includes a main cylindrical body (51, 151) having a fixed base part (52, 152) that is inserted onto and fixed to the end of the outer periphery of the outer ring (30), wherein
the main cylindrical body (51, 151) is formed so as to have a tapered cylinder shape of which the.diameter is gradually changed toward a tip of the main cylindrical body from the fixed base part (52, 152), **characterized in that** the outer sealing member includes an elastic sealing lip (60, 160) that is integrally formed along a periphery of the tip of the main cylindrical body (51, 151) and is elastically press-contacted to a side of the flange (12), wherein the outer sealing member (50, 150) includes a drainage hole (55) at a lower part of the outer sealing member (50, 150), and wherein the drainage hole (55) is formed in vicinity of a downwardly sloped end of the lower part of the main cylindrical body (51, 151) of the outer sealing member (50, 150).

2. The bearing device according to claim 1, wherein the outer sealing member (50, 150) includes a reinforcement rib (53, 153) projecting outward in a radial direction at a terminal of the fixed base part (52, 152) of the main cylindrical body (51, 151).

3. The bearing device according to any one of claims 1 or 2, wherein the diameter of the tapered cylinder shape is gradually increased toward the tip from the fixed base part (52, 152).

4. The bearing device according to any one of claims 1 to 2, wherein the diameter of the tapered cylinder shape is gradually decreased toward tip from the fixed base part (52, 152).

## Patentansprüche

1. Lagervorrichtung für ein Rad, umfassend:
ein Wälzlager (20), das einen Innenring (21, 23), einen Außenring (30), Wälzelemente (40, 41), die zwischen dem Innenring (21, 23) und dem Außenring (30) angeordnet sind, und ein Innendichtelement (45), das in einem ringförmigen Zwischenraum, der zwischen dem Innenring (21, 23) und dem Außenring (30) definiert ist, eingebaut ist, um den ringförmigen Zwischenraum abzudichten, umfasst;
ein Nabenrad (10), das einen Flansch (12), an dem ein Rad befestigt werden soll, und eine zylindrische Welle (15), an der das Wälzlager (20) derart eingebaut ist, dass das Innendichtelement (45) an einer Seite des Flansches (12) liegt, umfasst; und
ein Außendichtelement (50, 150), das auf einem Ende eines Außenumfangs des Außenrings (30), der an der Seite des Flansches (12) liegt, befestigt ist, um so einen Zwischenraum, der zwischen dem Außenring (30) und dem Flansch (12) definiert ist, zu schließen, wobei
das Außendichtelement (50, 150) einen zylindrischen Hauptkörper (51, 151) mit einem festen Basisteil (52, 152), das auf dem Ende des Außenumfangs des Außenrings (30) eingesetzt und daran befestigt wird, umfasst, wobei
der zylindrische Hauptkörper (51, 151) so ausgebildet ist, dass er eine angeschrägte Form aufweist, deren Durchmesser sich von dem festen Basisteil (52, 152) zu einer Spitze des zylindrischen Hauptkörpers allmählich verändert, **dadurch gekennzeichnet, dass** das Außendichtelement eine elastische Dichtlippe (60, 160) umfasst, die einstückig entlang eines Umfangs der Spitze des zylindrischen Hauptkörpers (51, 151) ausgebildet ist und elastischen Druckkontakt mit einer Seite des Flansches (12) hat, wobei das Außendichtelement (50, 150) ein Ablaufloch (55) an einem unteren Teil des Außendichtelements (50, 150) umfasst, und wobei das Ablaufloch (55) in der Nähe eines nach unten geneigten Endes des unteren Teils des zylindrischen Hauptkörpers (51, 151) des Außendichtelements (50, 150) ausgebildet ist.

2. Lagervorrichtung nach Anspruch 1, wobei das Außendichtelement (50, 150) eine Verstärkungsrippe (53, 153) aufweist, die nach außen in einer radialen Richtung an einem Ende des feststehenden Basisteils (52, 152) des zylindrischen Hauptkörpers (51, 151) vorsteht.

3. Lagervorrichtung nach einem der Ansprüche 1 oder 2, wobei der Durchmesser der angeschrägten Zylinderform vom feststehenden Basisteil (52, 152) in Richtung zur Spitze allmählich zunimmt.

4. Lagervorrichtung nach einem der Ansprüche 1 bis 2, wobei der Durchmesser der angeschrägten Zylinderform vom feststehenden Basisteil (52, 152) in Richtung zur Spitze allmählich abnimmt.

## Revendications

1. Dispositif formant palier pour roue comprenant :
un palier à roulement (20) qui comporte une bague interne (21, 23), une bague externe (30), des éléments roulants (40, 41) disposés entre les bagues interne (21, 23) et externe (30), et un élément d'étanchéité interne (45) assemblé dans un espace annulaire défini entre les bagues interne (21 et 23) et externe (30) afin d'assurer l'étanchéité de l'espace annulaire ;
un moyeu de roue (10) qui comporte une collerette (12) sur laquelle une roue doit être assemblée et un arbre cylindrique (15) sur lequel le palier à roulement (20) est assemblé de telle manière que l'élément d'étanchéité interne (45) est situé sur une face de la collerette (12) ; et
un élément d'étanchéité externe (50, 150) sur une extrémité d'une périphérie externe de la bague externe (30) située sur la face de la collerette (12) de manière à obturer un espace qui est défini entre la bague externe (30) et la collerette (12), dans lequel
l'élément d'étanchéité externe (50, 150) comporte un corps cylindrique principal (51, 151) présentant une partie de base fixe (52, 152) qui est insérée et fixée sur l'extrémité de la périphérie externe de la bague externe (30), dans lequel
le corps cylindrique principal (51, 151) est formé de manière à présenter une forme en cylindre conique dont le diamètre varie progressivement vers une pointe du corps cylindrique principal à partir de la partie de base fixe (52, 152), **caractérisé en ce que** l'élément d'étanchéité externe comporte une lèvre d'étanchéité élastique (60, 160) qui est formée de manière unitaire le long d'une périphérie de la pointe du corps cylindrique principal (51, 151) et est appliquée en contact élastique sur une face de la collerette (12) dans lequel l'élément d'étanchéité externe (50, 150) comporte un orifice de purge (55) au niveau d'une partie inférieure de l'élément d'étanchéité externe (50, 150), et dans lequel l'orifice de purge (55) est formé à proximité d'une extrémité inclinée vers le bas de la partie inférieure du corps cylindrique principal (51, 151) de l'élément d'étanchéité externe (50, 150).

2. Dispositif formant palier selon la revendication 1, dans lequel l'élément d'étanchéité externe (50, 150) comporte une nervure de renforcement (53, 153) s'étendant vers l'extérieur dans une direction radiale au niveau d'une extrémité de la partie de base fixe (52, 152) du corps cylindrique principal (51, 151).

3. Dispositif formant palier selon l'une quelconque des revendications 1 ou 2, dans lequel le diamètre de la forme en cylindre conique augmente progressivement vers la pointe à partir de la partie de base fixe (52, 152).

4. Dispositif formant palier selon l'une quelconque des revendications 1 ou 2, dans lequel le diamètre de la forme en cylindre conique diminue progressivement vers la pointe à partir de la partie de base fixe (52, 152).
